# EUROPEAN PATENT APPLICATION

(11) **EP 3 961 798 A1**
(43) Date of publication of application: **02.03.2022**
(21) Application number: 21193350.2
(22) Date of filing: 26.08.2021
(51) Int. Cl.: H01M 50/531, H01M 50/536, H01M 50/538, H01M 10/058

(54) **BATTERY CORE, BATTERY, AND BATTERY PACK**

(30) Priority: 31.08.2020 CN 202010898785
(71) Applicant: BYD Company Limited, Shenzhen, Guangdong 518118 (CN)
(72) Inventor: WANG, Xinyue, Shenzhen, 518118 (CN); DUAN, Pingan, Shenzhen, 518118 (CN); CHENG, Han, Shenzhen, 518118 (CN)
(74) Representative: DehnsGermany Partnerschaft von Patentanwälten

(57) **Abstract**

The present invention provides a battery core, a battery, and a battery pack. The battery core includes: at least one core, where each core has a plurality of tabs, the plurality of tabs successively form, after being converged, a tab end-portion staggered layer region, a tab soldering region, and a pre-soldered press-fit region, parts of the plurality of tabs exposed out of the core form a tab exposure region, and a length of the tab exposed out of the core in the tab exposure region is determined according to a width of the tab end-portion staggered layer region, a width of the tab soldering region, a width of the pre-soldered press-fit region, a thickness of the core, and a tab bending angle of the tab. Such a setting can make the length of the tab exposed out of the core in the tab exposure region more appropriate, and can prevent the tab after bending prevented from being pulled and torn, so as to avoid a capacity loss of the battery core. Moreover, the movable length of the tab can be made appropriate, the bending space can be made appropriate, and therefore, the capacity loss of the battery core can be avoided. In addition, the tab can be prevented from being compressed, so as to improve the safety of the battery core in use.

## Description

### FIELD

The present invention relates to the field of batteries, and particularly, to a battery core, a battery, and a battery pack.

### BACKGROUND

In the related art, a plurality of tabs of a core are soldered together after being converged, and parts of the plurality of tabs exposed out of the core form a tab exposure region. If the length of the tab exposure region is designed too long, the movable length of the tab is increased, and a larger bending space is required for accommodating the tab. The design of a larger bending space leads to a capacity loss of the battery core. If the bending space is not increased, the tab is compressed, which is likely to cause positive and negative electrodes to come into contact with each other, posing a safety risk.

If the length of the tab exposure region is designed too short, the tab after bending is likely to be pulled to cause tearing of the tab. Once the tab is torn, some electrode plates cannot output electricity, resulting in a capacity loss of the battery core.

### SUMMARY

The present invention aims to resolve at least one of the technical problems existing in the prior art. In view of this, an objective of the present invention is to provide a battery core. The battery core can prevent a tab from being pulled after bending, can avoid a capacity loss of the battery core, and can also prevent the tab from being compressed, so as to improve the safety of the battery in use.

The invention is set out in the appended set of claims. Provided are a battery core, a battery and a battery pack according to the independent claims; dependent claims relate to preferred embodiments.

The battery core according to the present invention includes: at least one core, where each core has a plurality of tabs, the plurality of tabs successively form, after being converged, a tab end-portion staggered layer region, a tab soldering region, and a pre-soldered press-fit region, parts of the plurality of tabs exposed out of the core form a tab exposure region, and a length of the tab exposed out of the core in the tab exposure region is determined according to a width of the tab end-portion staggered layer region, a width of the tab soldering region, a width of the pre-soldered press-fit region, a thickness of the core, and a tab bending angle of the tab.

According to the battery core in the present invention, the length of the tab exposed out of the core in the tab exposure region can be made more appropriate, and the tab after bending can be prevented from being pulled and torn, and therefore, the capacity loss of the battery core can be avoided. Moreover, the movable length of the tab can also be made appropriate, and the bending space can be made appropriate, and therefore, the capacity loss of the battery core can be avoided. In addition, the tab can be prevented from being compressed, so as to improve the safety of the battery core in use.

Preferably, the width of the tab end-portion staggered layer region is d₁, the tab soldering region is provided with a tab protection sheet, a width of the tab protection sheet is d₂, the width of the pre-soldered press-fit region is d₃, the thickness of the core is D, and the tab bending angle of any one tab in the plurality of tabs is A, the length of the exposed tab in the tab exposure region is L, and a relational expression L=d₁+d₂+d₃+D/2^{∗}tan A is satisfied.

Preferably, A satisfies a relational expression 45°≤A≤135°.

Preferably, a ratio of d₂ to d₁ is B, and satisfies a relational expression 4<B<10.

Preferably, a ratio of d₂ to d₃ is C, and satisfies a relational expression 4<C<24.

Preferably, a relational expression 0 mm<d₁<8 mm is satisfied.

Preferably, a relational expression 8 mm≤d₂≤12 mm is satisfied.

Preferably, a relational expression 0.5 mm≤d₃≤2 mm is satisfied.

The battery according to the present invention includes the battery core.

The battery pack according to the present invention includes the battery.

The additional aspects and advantages of the present invention will be set forth in part in the description below, parts of which will become apparent from the description below, or will be understood by the practice of the present invention.

### BRIEF DESCRIPTION OF THE DRAWINGS

The foregoing and/or additional aspects and advantages of the present invention become obvious and easily understood in descriptions of the embodiments with reference to the following accompanying drawings.
FIG. 1 is a schematic diagram of a battery according to an embodiment of the present invention;
FIG. 2 is a schematic diagram in which tabs of a core of a battery core have not been bent after being converged according to an embodiment of the present invention; and
FIG. 3 is another schematic diagram in which tabs of a core of a battery core have not been bent after being converged according to an embodiment of the present invention.

Reference numerals:
battery core 10;
core 20; tab 201; separator 202; tab end-portion staggered layer region 203; tab soldering region 204; pre-soldered press-fit region 205; tab exposure region 206; tab protection sheet 207; and
battery 100.

### DETAILED DESCRIPTION

A detail description of the embodiments of the present invention will be made in the following, and examples thereof are illustrated in the accompanying drawings, throughout which identical or similar elements or elements having identical or similar functions are represented with identical or similar reference numerals. The embodiments that are described with reference to the accompanying drawings are exemplary, and are only used to interpret the present invention, instead limiting the present invention.

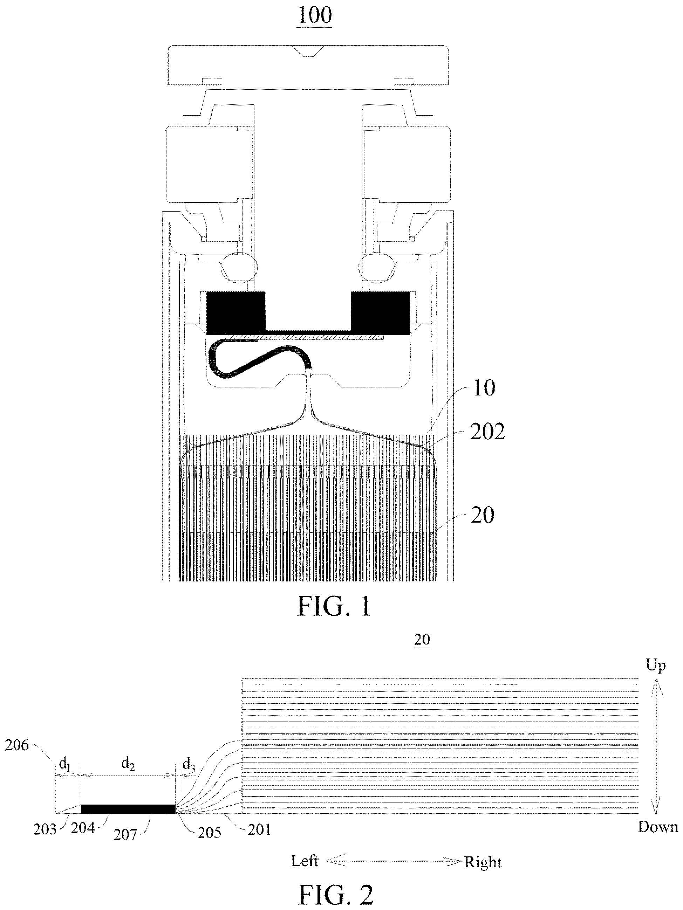

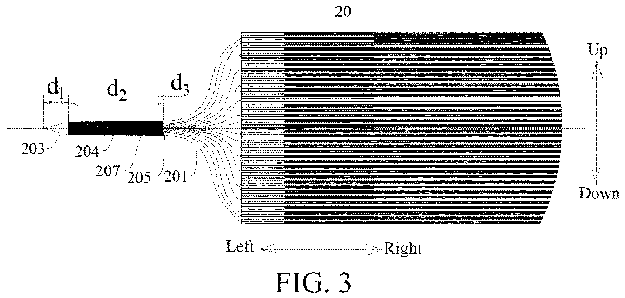

A battery core 10 according to the embodiments of the present invention is described below with reference to FIG. 1 to FIG. 3.

As shown in FIG. 1 to FIG. 3, the battery core 10 according to the embodiments of the present invention includes: at least one core 20, where each core 20 has a plurality of tabs 201, the plurality of tabs 201 successively form, after being converged, a tab end-portion staggered layer region 203, a tab soldering region 204, and a pre-soldered press-fit region 205. It is to be noted that free ends of the plurality of tabs 201 jointly form the tab end-portion staggered layer region 203, because curved radians of the tabs 201 are different after the plurality of tabs 201 are converged. The pre-soldered press-fit region 205 is a region formed by press-fitting the plurality of tabs 201, which have been converged, at the position of convergence by ultrasonic soldering or other soldering methods. The tab soldering region 204 is a region formed by soldering the tabs 201 and a tab lead-out sheet in a laser soldering or another soldering manner in the pre-soldered press-fit region 205. The parts of the plurality of tabs 201 exposed out of the core 20 form the tab exposure region 206. In an extension direction of the tab 201, that is, a left-right direction shown in FIG. 2, a length of the tab exposed out of the core 10 in the tab exposure region 206 is determined according to a width of the tab end-portion staggered layer region 203, a width of the tab soldering region 204, a width of the pre-soldered press-fit region 205, a thickness of the core 20, and a tab bending angle of the tab 201.

A width direction of the tab end-portion staggered layer region 203, a width direction of the tab soldering region 204, and a width direction of the pre-soldered press-fit region 205 are all the left-right direction shown in FIG. 2. A thickness direction of the core 20 is an updown direction shown in FIG. 2, and when the tabs 201 of the core 20 have not been bent after being converged, the exposed tab extends in the left-right direction shown in FIG. 2. Each core 20 has a plurality of separators 202, and parts of the plurality of tabs 201 exposed out of the separators 202 form the tab exposure region 206.

By determining the length of the tab exposure region 206 according to the width of the tab end-portion staggered layer region 203, the width of the tab soldering region 204, the width of the pre-soldered press-fit region 205, the thickness of the core 20, and the tab bending angle of the tab 201, the length of the tab in the tab exposure region 206 exposed out of the core 20 can be made more appropriate, so as to prevent the tab 201 from being pulled and torn after bending, and avoid the problem that some electrode plates cannot output electricity, thereby avoiding a capacity loss of the battery core 10. In addition, the movable length of the tab 201 can also be made appropriate, and the bending space for accommodating the tabs 201 can be made appropriate, so as to avoid the capacity loss of the battery core 10, and prevent the tabs 201 from being compressed to cause positive and negative electrodes of the battery core 10 to come into contact with each other and cause a short circuit of the battery core 10, thereby improving the safety of the battery core 10 in use.

In some embodiments of the present invention, as shown in FIG. 2, the width of the tab end-portion staggered layer region 203 is d₁, the tab soldering region 204 is provided with a tab protection sheet 207, a width of the tab protection sheet 207 is d₂, a width direction of the tab protection sheet 207 is the left-right direction shown in FIG. 2, the width of the pre-soldered press-fit region 205 is d₃, the thickness of the core 20 is D, the tab bending angle of any one tab 201 in the plurality of tabs 201 is A, the length of the exposed tab in the tab exposure region 206 is L, and a relational expression L=d₁+d₂+d₃+D/2^{∗}tan A is satisfied. Such a setting can ensure that the length of the tab exposed out of the core 20 in the tab exposure region 206 is more appropriate, can further prevent the tabs 201 from being pulled after bending, further prevent the tabs 201 from being torn, and avoid the problem that some electrode plates cannot output electricity, thereby further avoiding the capacity loss of the battery core 10. In addition, the movable length of the tab 201 can be ensured to be more appropriate, and the bending space for accommodating the tabs 201 can be made more appropriate, so as to avoid the capacity loss of the battery core 10, and further prevent the tabs 201 from being compressed to cause positive and negative electrodes of the battery core 10 to come into contact with each other, so as to better prevent a short circuit of the battery core 10, thereby further improving the safety of the battery 100 in use.

Further, A satisfies a relational expression 45°≤A≤135°, and preferably, 60°≤A≤120°. Such a setting makes the bending angle of the tab 201 more appropriate, can make the length of the tab exposed out of the core 20 in the tab exposure region 206 appropriate, and prevent the separator 202 from being compressed to cause the positive and negative electrode of the battery core 10 to come into contact with each other, so as to better prevent a short circuit of the battery core 10.

In some embodiments of the present invention, a ratio of d₂ to d₁ is B, and satisfies a relational expression 4<B<10. Further, a ratio of d₂ to d₃ is C, and satisfies a relational expression 4<C<24. Such a setting makes the ratio of d₂ to d₁ and the ratio of d₂ to d₃ appropriate, which facilitates the production and manufacture of the core 20. In addition, the soldering width of the tab soldering region 204 can be made appropriate, so as to ensured that the plurality of tabs 201 can be soldered together reliably, thereby improving the reliability of the battery core 10 in use.

In some embodiments of the present invention, a relational expression 0 mm<d₁<8 mm is satisfied. Preferably, d₁ is 4 mm. Such a setting makes the width of the tab end-portion staggered layer region 203 appropriate, which can prevent the width of the tab end-portion staggered layer region 203 from being too large, so as to make the length of the tab exposure region 206 more appropriate.

In some embodiments of the present invention, a relational expression 8 mm≤d₂≤12 mm is satisfied. Preferably, d₂ is 10 mm. Such a setting makes the width of the tab protection sheet 207 appropriate, and the soldering width of the tab soldering region 204 can be ensured, so as to make the length of the tab exposure region 206 appropriate, thereby further facilitating the production and manufacture of the core 20.

In some embodiments of the present invention, a relational expression 0.5 mm≤d₃≤2 mm is satisfied. Preferably, d₃ is 1.5 mm. When soldering the plurality of tabs 201, setting d₃ to 1.5 mm can make the width of the pre-soldered press-fit region 205 appropriate, so that a pre-soldering and pressing block can firmly press the plurality of tabs 201, so as to ensure the soldering quality of the plurality of tabs 201, thereby ensuring the production quality of the battery core 10.

A battery 100 according to the embodiments of the present invention includes the battery core 10 in the foregoing embodiments, and the battery core 10 is disposed on the battery 100. Therefore, the length of the tab exposed out of the core 20 in the tab exposure region 206 can be made more appropriate, and the tab 201 after bending can be prevented from being pulled and torn, so as to avoid a capacity loss of the battery core 10 and further to avoid the capacity loss of the battery 100. Moreover, the movable length of the tab 201 can be made appropriate, the bending space can be made appropriate, and therefore, the capacity loss of the battery core 10 can be avoided. In addition, the tab 201 can be prevented from being compressed, so as to improve the safety of the battery core 10 in use, and further to improve the safety of the battery 100 in use.

A battery pack according to the embodiments of the present invention includes the battery 100 in the foregoing embodiments. The battery 100 is disposed in the battery pack, which can avoid the capacity loss of the battery pack and improve the safety of the battery pack in use.

In the description terms such as "an embodiment", "some embodiments", "exemplary embodiments", "example", "specific example", or "some examples" means that specific features, structures, materials or characteristics described with reference to the embodiment or example are included in at least one embodiment or example of the present invention. In this specification, exemplary descriptions of the foregoing terms do not necessarily refer to the same embodiment or example. In addition, the described specific features, structures, materials, or characteristics may be combined in a proper manner in any one or more of the embodiments or examples.

Although the embodiments of the present invention are already shown and described above, a person of ordinary skill in the art is to be understood that various changes, modifications, replacements, and variations may be made to the embodiments without departing from the principles and spirit of the present invention, and the scope of the present invention is defined by the appended claims and their equivalents.

## Claims

1. A battery core, comprising:
at least one core, wherein each core has a plurality of tabs, the plurality of tabs successively form, after being converged, a tab end-portion staggered layer region, a tab soldering region, and a pre-soldered press-fit region, parts of the plurality of tabs exposed out of the core form a tab exposure region, and a length of the tab exposed out of the core in the tab exposure region is determined according to a width of the tab end-portion staggered layer region, a width of the tab soldering region, a width of the pre-soldered press-fit region, a thickness of the core, and a tab bending angle of the tab.

2. The battery core according to claim 1, wherein the width of the tab end-portion staggered layer region is d₁, the tab soldering region is provided with a tab protection sheet, a width of the tab protection sheet is d₂, the width of the pre-soldered press-fit region is d₃, the thickness of the core is D, and the tab bending angle of any one tab in the plurality of tabs is A, the length of the exposed tab in the tab exposure region is L, and a relational expression L=d₁+d₂+d₃+D/2^{∗}tan A is satisfied.

3. The battery core according to claim 1, wherein A satisfies a relational expression 45°≤A≤135°.

4. The battery core according to claim 2, wherein a ratio of d₂ to d₁ is B, and satisfies a relational expression 4<B<10.

5. The battery core according to claim 2, wherein a ratio of d₂ to d₃ is C, and satisfies a relational expression 4<C<24.

6. The battery core according to claim 2, wherein a relational expression 0 mm<d₁<8 mm is satisfied.

7. The battery core according to claim 2, wherein a relational expression 8 mm≤d₂≤12 mm is satisfied.

8. The battery core according to claim 2, wherein a relational expression 0.5 mm≤d₃≤2 mm is satisfied.

9. A battery, comprising the battery core according to any one of claims 1 to 8.

10. A battery pack, comprising the battery according to claim 9.
